# EUROPÄISCHE PATENTSCHRIFT

(11) **EP 1 710 074 B1**
(45) Veröffentlichungstag und Bekanntmachung des Hinweises auf die Patenterteilung: **08.10.2014**
(21) Anmeldenummer: 06014251.0
(22) Anmeldetag: 19.06.2002
(51) Int. Cl.: B29C 51/46, B26D 5/00

(54) **Werkzeug mit einem Sensorchip**
TOOL WITH A SENSOR CHIP
OUTIL POURVU D'UNE PUCE DE DETECTION

(30) Priorität: 20.06.2001 DE 10129392
(43) Veröffentlichungstag der Anmeldung: 11.10.2006
(62) Teilanmeldung aus: 02762294.3
(73) Patentinhaber: Convenience Food Systems Wallau GmbH & Co. KG, 35216 Biedenkopf-Wallau (DE)
(72) Erfinder: Michel, Frank, 35329 Steffenberg (DE)
(74) Vertreter: Wolff, Felix

(56) Entgegenhaltungen:
- EP-A- 1 084 806
- EP-A2- 0 600 672
- EP-A2- 0 726 129
- US-A- 5 571 539
- US-A- 6 047 579
- US-A- 6 101 857
- PATENT ABSTRACTS OF JAPAN Bd. 2000, Nr. 13, 5. Februar 2001 (2001-02-05) -& JP 2000 281361 A (FUJI PHOTO OPTICAL CO LTD), 10. Oktober 2000 (2000-10-10)
- PATENT ABSTRACTS OF JAPAN Bd. 011, Nr. 102 (M-576), 31. März 1987 (1987-03-31) & JP 61 252114 A (JAPAN STEEL WORKS LTD:THE), 10. November 1986 (1986-11-10)
- PATENT ABSTRACTS OF JAPAN Bd. 1995, Nr. 09, 31. Oktober 1995 (1995-10-31) & JP 07 161745 A (HITACHI LTD), 23. Juni 1995 (1995-06-23)

## Beschreibung

Die vorliegende Erfindung betrifft ein Werkzeug, insbesondere in einer Verpackungsmaschine, zum Tiefziehen von Verpackungsmulden und/oder Siegeln und Schneiden von Verpackungen, bei der das Werkzeug mit einer Hubvorrichtung angehoben und abgesenkt wird.

Solche Werkzeuge werden in US 6047579, JP 2000 281 361, EP 1 084 806, JP 6 125 2114, JP 07161745 und US 5571539 offenbart.

Verpackungsmaschinen sind heutzutage mit einer Vielzahl von Werkzeugen betreibbar. Bei einem Wechsel dieser Werkzeuge müssen die Maschinenparameter, wie beispielsweise der untere und obere Totpunkt der Hubvorrichtungen in den Verpackungsmaschinen, aber auch die Kühlung bzw. die Temperatur beim Siegeln neu eingestellt werden. Da dies sehr aufwendig ist, hat man in der Vergangenheit versucht, die Werkzeuge, beispielsweise deren Bauhöhe, zu vereinheitlichen, um den Einstellaufwand zu minimieren. Diese Werkzeuge sind dann jedoch für den jeweiligen Anwendungsfall nicht optimal gestaltet.

Der vorliegenden Erfindung liegt deshalb die Aufgabe zugrunde, Werkzeuge, insbesondere für Verpackungsmaschinen, zur Verfügung zu stellen, die die Nachteile des Standes der Technik nicht aufweisen.

Gelöst wird diese Aufgabe durch ein Werkzeug nach Anspruch 1.

Erfindungsgemäß weist das Werkzeug demnach einen beschreib- und abfragbaren Datenspeicher auf, auf dem Daten gespeichert sind. Diese Daten können zum einen Daten wie beispielsweise eine Zahlenfolge sein, mit der eine eindeutige Kennung des Werkzeuges möglich ist, so daß eine elektronische Vorrichtung, beispielsweise ein Computer oder ein Prozeßleistsystem, die in der Verpackungsmaschine angeordnet ist, zweifelsfrei das Werkzeug identifiziert und dann diesem Werkzeug bestimmte Maschinenparameter zuordnet und diese automatisch entsprechend einstellt.

Ebenfalls erfindungsgemäß weist der Datenspeicher bereits die Sollwerte für die automatische Einstellung der Maschinenparameter auf. Eine elektronische Vorrichtung, beispielsweise ein Computer oder ein Prozeßteitsystem, lesen diese Maschinenparameter von dem Datenspeicher und stellen sie automatisch entsprechend ein.

Diese Maschinenparameter können beispielsweise der obere und der untere Totpunkt der Hubvorrichtung, mit der das jeweilige Werkzeug angehoben bzw. abgesenkt wird, die Temperatur auf die das Werkzeug erwärmt oder gekühlt wird sowie der Anpreßdruck, mit dem das Werkzeug gegen ein anderes Werkzeug gedrückt wird, sein.

Vorzugsweise beinhaltet der Datenspeicher Sollwerte für den oberen und besonders bevorzugt zusätzlich für den unteren Totpunkt der Hubvorrichtung.

In einer anderen bevorzugten Ausführungsform beinhaltet der Datenspeicher Kennungsdaten, mit denen eine eindeutige Korrelierung und Einstellung des oberen und vorzugsweise des unteren Totpunktes der Hubvorrichtung möglich ist. Die Korrelationsdaten sind vorzugsweise in einen Computer oder einem Prozeßleitsystem gespeichert, der/das mit dem Sensorchip verbunden ist.

Diese beiden bevorzugten Ausführungsformen des erfindungsgemäßen Werkzeuges haben den Vorteil, daß die Höhe des Werkzeuges optimal gestaltet werden kann. Die unterschiedliche Höhe wird dann automatisch durch die Einstellung des oberen und des unteren Totpunktes der Hubvorrichtung kompensiert. Durch das erfindungsgemäße Werkzeug werden lange Umrüstzeiten und insbesondere Fehler bei der Einstellung von Maschinenparametern, die zu einer Beschädigung der Verpackungsmaschine und/oder mangelhaften Produkten führen kann, vermieden.

Ein weiterer Gegenstand der vorliegenden Erfindung ist ein Werkzeug, insbesondere in einer Verpackungsmaschine, wobei in das Werkzeug ein Sensorchip eingebaut ist, der ein beschreib- und abfragbaren Datenspeicher aufweist, in dem Daten gespeichert sind, die als Ist-Werte zum Abgleich mit den Daten eines zweiten, der Verpackungsmaschine zugeordneten Datenspeichers verwendet werden, dessen auf das Werkzeug abgestimmte Daten als Sollwerte für einen Ist-Sollwert-Vergleich dienen und die Steuerung der Verpackungsmaschine so ausgelegt ist, daß diese nicht in Betrieb nehmbar ist, wenn die Ist-Werte von den Sollwerten abweichen.

Bei dem erfindungsgemäßen Werkzeug ist zunächst einmal sichergestellt, daß dessen Ersatz durch ein für die zugehörige Verpackungsmaschine nicht vorgesehenes Werkzeug nicht gelingt, weil in einem solchen Fall der Ist-Sollwert-Vergleich mißlingt und die Verpackungsmaschine überhaupt nicht in Gang setzbar ist. Das trifft sowohl dann zu, wenn ein nicht passendes Werkzeug desselben Herstellers als auch ein Werkzeug eines anderen Herstellers eingebaut worden ist; in beiden Fällen wird der Betreiber auf den Fehler aufmerksam gemacht und eine Fehlfunktion der Maschine wird sicher vermieden.

Zusätzlich ist es nunmehr möglich, daß auch bei solchen Verpackungsmaschinen, bei dem außer dem Werkzeug auch das dazugehörige Gegenstück, beispielsweise der Stempel beim Tiefziehen und/oder das Oberwerkzeug beim Siegeln auswechselbar ist, gewährleistet werden kann, daß nur eine solche Paarung ausgebildet werden kann, bei der die einzelnen Werkzeuge zueinander passend sind. Ist dies nicht der Fall, verhindert die Steuerung der Verpackungsmaschine wiederum deren Inbetriebnahme.

Bei den beiden o. g. Gegenständen der vorliegenden Erfindung ist es besonders vorteilhaft, wenn der Sensorchip an dem Werkzeug in einem abgeschlossenen Hohlraum vorgesehen ist, so daß er für Unbefugte weder auffindbar ist, noch manipuliert werden kann. Der Chip wird vorteilhafterweise so in dem Hohlraum versenkt, daß er, wenn er zufällig entdeckt wird, beim Ausbau der Datenspeicher unbrauchbar und der Sensorchip zerstört wird.

Die erfindungsgemäßen Werkzeuge können jegliche Werkzeuge sein, die bei einer Maschine, insbesondere einer Verpackungsmaschine auswechselbar sind. Vorzugsweise sind die Werkzeuge jedoch Tiefzieh-, Siegel- oder Schneidwerkzeuge.

Die Datenabfrage aus den in den Werkzeugen integrierten Datenspeichern gelingt bei einer Verpackungsmaschine am besten, wenn der Sensorchip mit einer an der Verpackungsmaschine angeordneten oder mobilen Sende- und Empfangsanlage bidirektional drahtlos gekoppelt ist. Ein weiteren Gegenstand der vorliegenden Erfindung ist deshalb eine solche Verpackungsmaschine.

Vorzugsweise ist die Sende- und Empfangsanlage über einen Verstärker mit einem zweiten Datenspeicher und/oder einer elektronischen Maschinensteuerung, beispielsweise einem Prozeßleitsystem, verbunden, so daß der Datenstand des Werkzeug ablesbar gemacht werden kann und die Daten entweder zur Freigabe der Inbetriebnahme der Verpackungsmaschine oder zur automatischen Einstellung von Maschinenparametern herangezogen werden können. Die Sende- und Empfangsanlage ist besonders vorteilhaft in unmittelbarer Nähe des jeweiligen Werkzeuges vorgesehen.

Vorteilhaft kann die Sende- und Empfangsanlage auch mobil ausgebildet sein.

Die erfindungsgemäße Verpackungsmaschine hat den Vorteil, daß die Umrüstzeiten minimal sind, daß bei der Einstellung der Verfahrensparameter keine Fehler passieren können und das Werkzeugpaare, die nicht zusammenpassen, nicht eingesetzt werden können.

Ein weiterer Gegenstand der vorliegenden Erfindung ist ein Verfahren zum automatischen Einstellen von Maschinenparametern unter Verwendung der erfindungsgemäßen Verpackungsmaschine, bei dem zumindest beim Umrüsten der Verpackungsmaschine die Daten des Datenspeichers mindestens eines Werkzeuges abgefragt und dann über die elektronische Steuerung die einstellbaren Maschinenparameter entsprechend der Kennung des Werkzeuges und/oder den gespeicherten Sollwerten automatisch eingestellt werden.

In einer vorteilhaften Ausführungsform der vorliegenden Erfindung wird über einen Soll-Ist-Vergleich die Einstellung der Maschinenparameter zumindest einmal überprüft. Besonders bevorzugt wird die Einstellung jedoch in regelmäßigen Abständen überprüft, um insbesondere eine gleichbleibende Qualität der hergestellten Produkte sicherzustellen.

Vorzugsweise werden alle Maschinenparameter, die bei einem Werkzeugwechsel eingestellt werden müssen, von der Elektronik der Verpackungsmaschine automatisch eingestellt. Besonders bevorzugt werden jedoch zumindest der obere und der untere Totpunkt der Hubvorrichtung automatisch an das Werkzeug angepaßt.

Im folgenden wird die Erfindung anhand der Figuren 1 bis 3 erläutert. Diese Erläuterungen sind lediglich beispielhaft und schränken den allgemeinen Erfindungsgedanken nicht ein.
**Figur 1** zeigt ein erfindungsgemäßes Werkzeug.
**Figur 2** zeigt die erfindungsgemäße Verpackungsmaschine.
**Figur 3** zeigt die Empfangs- und Verstärkeranlage.

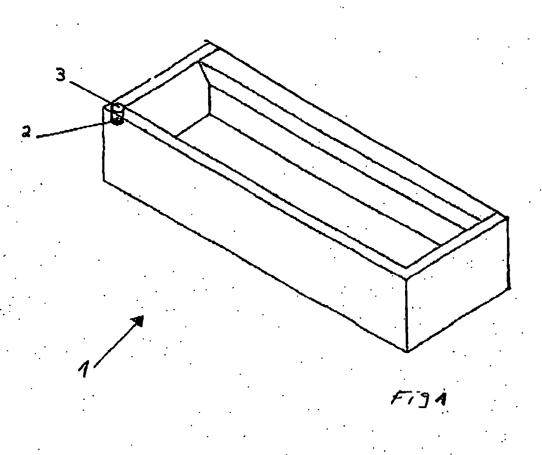

In **Figur 1** ist das erfindungsgemäße Werkzeug 1 dargestellt. In dem vorliegenden Beispiel ist das Werkzeug eine Tiefziehmatrize. Der Fachmann erkennt, daß das erfindungsgemäße Werkzeug genauso gut ein Siegelwerkzeug, ein Schneidwerkzeug oder dergleichen sein kann. In dem Werkzeug 1 ist ein Hohlraum 3 vorgesehen, in dem sich der Sensorchip 2 befindet. Der Hohlraum ist abgeschlossen, so daß der Chip von außen nicht sichtbar ist und der Chip keinen mechanischen Belastungen ausgesetzt ist.

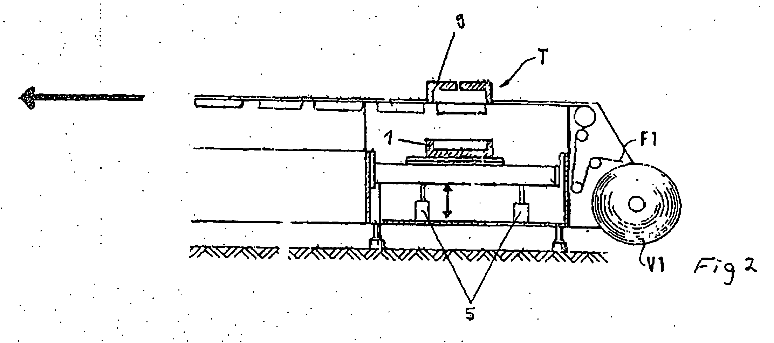

In **Figur 2** ist ein Teil einer erfindungsgemäßen Verpackungsmaschine, die Tiefziehstation, dargestellt. Die Folie F1 wird von einer Rolle V1 abgerollt und z. B. mit einem Kettenantrieb zur Tiefziehstation T transportiert. Dort wird die Folie fixiert und mit Heizelementen 9 erwärmt, wobei das Erwärmen der Folie auch vor der Tiefziehstation erfolgen kann. Das erfindungsgemäße Werkzeug 1 befindet sich auf einer Hubvorrichtung 5, mit der es angehoben und abgesenkt wird. Sobald das Werkzeug 1 an der Hubvorrichtung fixiert wird, werden über eine Sende- und Empfangsanlage die Daten auf dem Sensorchip 2, der sich in dem Werkzeug 1 befindet, abgefragt. Diese Daten werden sodann mit einem Computer verarbeitet und dieser Computer steuert sodann die automatische Einstellung der Maschinenparameter, wie beispielsweise des oberen und unteren Totpunktes der Hubvorrichtung. Unter oberem und unterem Totpunkt wird die obere bzw. untere Maximalstellung des Hubes verstanden.

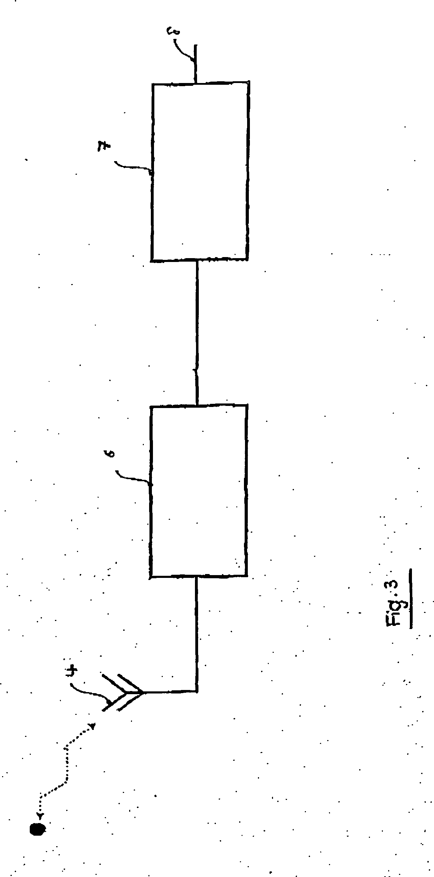

**Figur 3** ist eine chematische Darstellung einer Einrichtung zur Datenerfassung und Verarbeitung gemäß der vorliegenden Erfindung dargestellt. Die Sende- und Empfangsanlage 4 ist bidirektional über einen Verstärker 6 mit einem Computer 7 ebenfalls bidirektional verbunden. Dieser Computer 7 verarbeitet die empfangenen Daten und leitet diese über ein Interface 8 an die Steuerelektronik der Verpackungsmaschine weiter, die die Einstellung der Maschinenparameter vornimmt und diese Stellung wiederum an den Computer 7 zurückmeldet. Der Computer ermittelt über einen Soll-Ist-Vergleich, ob die Einstellungen richtig sind und gibt erst dann die Maschine frei. Analog funktioniert auch die Überprüfung, ob das eingesetzte Werkzeug zu der Verpackungsmaschine bzw. den Gegenstücken passend ist.

## Patentansprüche

1. Werkzeug (1) geeignet für die Verwendung in einer Verpackungsmaschine zum Tiefziehen von Verpackungsmulden und/oder Siegeln und Schneiden von Verpackungen, bei der das Werkzeug mit einer Hubvorrichtung (5) angehoben und abgesenkt wird, wobei das Werkzeug ein Sensor-Chip (2) eingebaut ist, der einen beschreib- und abfragbaren Datenspeicher aufweist, auf dem Daten gespeichert sind, die zur Kennung des Werkzeuges dienen und/oder Sollwerte für die automatische Einstellung von verstellbaren Maschinenparametern beinhalten, **dadurch gekennzeichnet, dass** der Sensor-Chip in einem abgeschlossenen Hohlraum so vorgesehen ist, so dass er für Unbefugte weder auffindbar ist, nach manipuliert werden kann, und so in dem Hohlraum versenkt ist, dass ihn ein Ausbau unbrauchbar macht oder zerstört.

2. Werkzeug nach Anspruch 1, **dadurch gekennzeichnet, daß** als Sollwert der obere und vorzugsweise des untere Totpunktes der Hubvorrichtung gespeichert ist.

3. Werkzeug nach Anspruch 1, **dadurch gekennzeichnet, daß** anhand der Kennung in dem Datenspeicher der obere und vorzugsweise der untere Totpunktes der Hubvorrichtung korrelierbar ist.

4. Werkzeug nach einem der voranstehenden Ansprüche, **dadurch gekennzeichnet, daß** der Sensor-Chip (2) einen beschreib- und abfragbaren Datenspeicher aufweist, in dem Daten gespeichert sind, die als Ist-Werte zum Abgleich mit den Daten eines zweiten, der Verpackungsmaschine zugeordneten Datenspeichers verwendet werden, dessen auf das Werkzeug abgestimmte Daten als Sollwert für einen Istwert-Sollwert-Vergleich dienen, wobei die Steuerung der Verpackungsmaschine so ausgelegt ist, daß diese nicht in Betrieb nehmbar ist, wenn die Ist-Werte von den Sollwerten abweichen.

5. Werkzeug nach einem der Ansprüche 1-4, **dadurch gekennzeichnet, dass** es ein Tiefzieh-, Siegel- oder Schneidwerkzeug ist.

## Claims

1. Die (1) which is suitable for use in a packaging machine for thermoforming packaging trays and/or sealing and cutting packages, with the die being raised and lowered by a lifting apparatus (5), wherein the die has an integrated sensor chip (2) which has a data memory which can be written to and interrogated and in which items of data are stored which serve to identify the die and/or contain setpoint values for automatically setting adjustable machine parameters, **characterized in that** the sensor chip is provided in a closed cavity such that it cannot be either found or manipulated by unauthorized persons, and is recessed in the cavity such that removal renders it unusable or destroys it.

2. Die according to Claim 1, **characterized in that** the top, and preferably the bottom, dead centre of the lifting apparatus is stored as the setpoint value.

3. Die according to Claim 1, **characterized in that** the top, and preferably the bottom, dead centre of the lifting apparatus can be correlated on the basis of the identification in the data memory.

4. Die according to one of the preceding claims, **characterized in that** the sensor chip (2) has a data memory which can be written to and interrogated and in which items of data are stored which are used as actual values for comparison with the data in a second data memory which is associated with the packaging machine and of which the items of data which are matched to the die serve as a setpoint value for an actual value/setpoint value comparison, wherein the control system of the packaging machine is designed such that the said packaging machine cannot be started when the actual values differ from the setpoint values.

5. Die according to one of Claims 1-4, **characterized in that** it is a thermoforming die, a sealing die or a cutting die.

## Revendications

1. Outil (1) adapté à une utilisation dans une machine de conditionnement servant à l'emboutissage de bacs de conditionnement et/ou au scellement et à la découpe d'emballages, dans lequel l'outil est levé et abaissé au moyen d'un dispositif de levée (5), une puce de détection (2) étant encastrée dans l'outil, ladite puce comportant une mémoire de données inscriptible et interrogeable sur laquelle des données sont mémorisées, lesdites données servant à caractériser l'outil et/ou contenant des valeurs théoriques pour le réglage automatique de paramètres de machine réglables, **caractérisé en ce que** la puce de détection est prévue de telle sorte dans un espace creux clos qu'elle ne peut, pour toute personne non autorisée, ni être trouvée ni manipulée et qu'elle est plongée dans l'espace creux, rendant ainsi tout démontage inutile ou superflu.

2. Outil selon la revendication 1, **caractérisé en ce que** la valeur théorique mémorisée est le point mort supérieur et de préférence inférieur du dispositif de levée.

3. Outil selon la revendication 1, **caractérisé en ce que** le point mort supérieur et de préférence inférieur peut être corrélé au dispositif de levée à l'aide de l'élément caractéristique contenu dans la mémoire de données.

4. Outil selon l'une quelconque des revendications précédentes, **caractérisé en ce que** la puce de détection (2) comporte une mémoire de données inscriptible et interrogeable sur laquelle des données sont mémorisées, lesdites données servant de valeurs réelles à compenser avec les données d'une deuxième mémoire de données associée à la machine de conditionnement dont les données calées sur l'outil servent de valeur théorique pour une comparaison valeur réelle-valeur théorique, la commande de la machine de conditionnement étant conçue de telle sorte qu'elle ne peut être mise en fonctionnement lorsque les valeurs réelles s'écartent des valeurs théoriques.

5. Outil selon l'une quelconque des revendications 1 à 4, caractérisé en qu'il prend la forme d'un outil d'emboutissage, de scellement ou de coupe.
